# EUROPEAN PATENT APPLICATION

(11) **EP 3 579 586 A1**
(43) Date of publication of application: **11.12.2019**
(21) Application number: 18176004.2
(22) Date of filing: 05.06.2018
(51) Int. Cl.: H04W 4/021, H04W 4/44, G06Q 20/32, H04W 12/02, G07F 17/24, G07B 15/02

(54) **IMPROVED SYSTEM AND METHOD FOR SERVICE ACCESS AND PAYMENT**

(71) Applicant: R2J Limited, East Wellow SO51 6BG (GB)
(72) Inventor: Wesby, Philip, 43539 Mölnlycke (SE)
(74) Representative: Gigerich, Jan

(57) **Abstract**

A system and method for service access and payment is described which has direct application to consumer service access and payment using a telecommunications device and software application, which enables a consumer to subscribe to third party services while keeping their personal information anonymous such that no personal identity information is sent and stored by the service provider company.

The invention has particular application to a server-based, remote service access and payment system for a wide range of services, including vehicle parking services. In this embodiment, a consumer opens the service software application on their multimedia device, enters their vehicle identity, parking location identity, and parking duration, and the service software application then directs the consumer to a micro-payment system, or payment is made using a cryptocurrency such as Bitcoin. A parking service assistant can verify that the parking service access is currently valid by inputting the vehicle registration number into a device comprising a similar software application, which processes the vehicle registration number with the parking identity data and time and computes a service validation data record, which is used to determine whether the service access is currently valid.

## Description

### BACKGROUND OF THE INVENTION

The invention relates to an improved system and method for service access and payment, by making use of a software application running on a telecommunications device such as a multimedia device or tablet, which can provide an intelligent smart solution for secure and anonymous service access requests and payments, and one which has direct application to vehicle parking services. The invention is equally applicable to other service access and payment transactions where the consumer may wish to remain anonymous and not provide personal data to third party service companies, such as payment for services which involve hiring use of a space, such as renting a room, renting a cinema seat, renting a sunbed on a beach, or renting a product such as a canoe, or boat, or a vehicle trailer. Furthermore, the absence of a product at a certain time, such as a boat absent from a designated mooring marker, or a canoe absent from a storage space, can form the way in which the service validation is determined.

In particular, the invention teaches an improved method for securely requesting access to and payment for a service, wherein the service access mechanism involves combining personal data, such as a vehicle identity, and or a personal identity, and or personal medical information, with general service identity data such as time data and or service identity information and or location data, and wherein the said personal data is encoded, and added to the general service identity data, which is in clear text, to form a service access data record, which is transmitted and stored on a service company computer server, and wherein the personal data forming part of the service access data record is transmitted and stored in a form that cannot be read by any non-authorized third party.

According to one embodiment of the invention, the personal data is encoded by a software application to create an encoded first identifier such as by using a hash function or one-way mathematical function, and this encoded hash function is combined with clear text general data such as time data and or service identity information and or location data, to form a service access data record, and transmitted to and stored on the computer server of the service provider company. To verify that the service access is still valid according to the service identity, such as for the current time and or location, an authorized service assistant uses a telecommunications device to compute a service validation hash function using a similar algorithm as the consumer using the service, by inputting the personal data associated with the service provider asset use such as the vehicle registration number, and or personal identity information, as well as the general service identity data such as the asset identifier and the current time and or location and or service identity to create a service validation data record. If the service access is still currently valid, the computed service validation data record can be identified as valid at this current time by comparing the computed service validation data record with service access data records stored on the service provider computer server. The validity of the service access is determined with reference to the general data such as the current time compared to the time stored in the corresponding service access record. If the current time is determined to be within the service access time period, the service access is deemed to be valid.

Either the service validation data record is sent to the service provider computer server as part of a single challenge-response transaction, or, part or all of the total set of service access data records for a particular service asset identity is downloaded to the authorized service assistant's telecommunications device for use when the assistant is at the location of the service. In the latter case, the comparison of the service access and service validation data records can be done locally on the authorized service assistant's telecommunications device.

Generally, electronic service access and service payment transactions are known in the prior art using a telecommunications device such as a multimedia device or tablet such as an iPad, and a software application downloaded from the service provider company. To use a service, a consumer must enter personal information, such as a personal identity number and, in the instance of paid car parking services, the vehicle registration number, and even confidential email data, and or confidential mobile phone data and or IP addresses, and or confidential payment data. This confidential personal data is then combined with location information and time information and sent to the computer server of the service provider. In this way, confidential personal data becomes stored on the service company computer server.

With the growing number of instances of security breaches of systems storing confidential personal data, many consumers are getting increasingly concerned about adopting services which demand storing their confidential data. Moreover, this confidential data is often retained by the service companies, and used to improve their service provision, and or sold to third party companies for marketing purposes.

Service providers demand this confidential data to verify one or more of the following:
the identity of a consumer using their service,
the email address where the payment request should be directed,
the postal address to where a paper invoice can be sent,
the telephone number of the consumer in case there is a problem with the payment, and, in the case of parking payment,
the identity of the vehicle using the service.

In fact, customer movement data is valuable because it offers the possibility of generating very targeted advertising. Knowing that a consumer is visiting a certain shopping centre frequently at a certain time, offers retailers the opportunity to send adverts directly to the consumer's smart phone offering goods and services, which are available at specific locations within that shopping centre. It may be that a minority of consumers appreciate focused advertising, but generally, consumers consider the sale and use of their personal data as an invasion of privacy. The current invention offers consumers an anonymous service access solution which does not involve transmitting any personal identity data which can be sold and used in this way.

In the evolving Internet-of-Things (IOT), an increasing number of autonomous systems are being developed which incorporate server-based application management. This invention describing an improved system and method for service access and payment builds upon a core aspect of EP 1,506,667 B1 in which consumer devices and their operation are managed by server platform software applications.

Today, the focus of consumer services has moved away from providing seamless and efficient services, which replace coin and credit card ticket machines, to multimedia systems, which now often have very punitive late payment schemes. Service companies now focus heavily on service payment transactions, which incorporate automatic late-payment penalties, and often include additional hidden service charges. In the instance of parking service companies, which link a consumer's vehicle identity and location and consumer personal data to an email demand for service access and payment within a time period of days, invoice emails may get overlooked or sent to the junk mailbox and the consumer subsequently receives an expensive late payment charge. The service companies may only derive a small service charge from each valid payment yet they can earn a significant return by focusing on late payment service charges such as when email invoices get lost, and the high hidden cost of sending out paper invoices to postal addresses. This is very unhelpful for consumers desiring a seamless parking payment transaction which would be easy to use and anonymous, and which would be service-oriented and offering immediate payment mechanisms such as one or more currently available micro-payment services such as PayPal and the like, or by making use of payment using a cryptocurrency such as Bitcoin.

Improved service access and payment services are needed by consumers who demand more convenient, easier-to-use, and customer-focused services, which provide early-alerting such as when the paid service is about to expire, and which incorporate an anonymous-user capability, hiding personal data from the service company thus maintaining privacy, which does not put confidential personal data at risk of being accessed by non-authorized persons or systems.

Additionally, companies which can develop valuable service solutions which focus on user benefits, while maintaining anonymity of service access and payments, will gain early and growing service adoption. Moreover, these customer-focused services with seamless and transparent anonymous payment transactions will displace less desirable service payment management services deriving high profits from fines and hidden charges.

Often, consumers genuinely pay for a service, such as payment for parking, but are delayed in getting back to their vehicle within the allotted time for which the service has been paid. The consequence is that on their late return, they may find a heavy parking fine. The ideal electronic parking payment service would incorporate a means within the software application on their telecommunications device to communicate a warning that they are approaching the end of the allowed service period. Moreover, the application should provide the means to make an additional payment, in the instance that extending payment for the service is permitted.

Consumers pay for services to validate their access to those services. Failure to pay may lead to being fined. Today, car parks are monitored intermittently by carpark supervising companies, and or pedestrian car park wardens, who note down the numbers of non-authorized cars parked in private parking zones, or cars which do not display a valid parking ticket. A smart telecommunications solution is needed which facilitates easier monitoring of car parks, as well as the means to discourage people from parking illegally in private parking areas, or parking without a valid parking ticket or permit.

The invention has particular application to a server-based, remote service access and payment system for vehicle parking services using a multimedia device such as a mobile phone or tablet. A consumer opens the service software application on their device or tablet, enters their vehicle identity, parking location identity, and parking duration, and the service software application then directs the consumer to one of a number of micro-payment systems or payment is made using a cryptocurrency such as Bitcoin. The invention involves encoding personal identity data, for example by using a hash function or a one-way mathematical function, although any other equivalent and or known means of encoding or encryption may be used, wherein it is impossible for any third party to determine the identity of the vehicle or other personal information from the encoded data. This encoded data forms a first protected identifier which is combined with a second identifier comprising data in clear text, which includes data of one or more of a number of asset use identifiers, such as the asset parking location identity, the time and duration of the parking period, and confirmation of payment, and or an amount of cryptocurrency. The combined first protected identifier together with the second identifier comprising data in clear text, form a service access data record, which is transmitted to and received by the parking service company computer server.

In a separate mode of operation of this parking service example, a parking service assistant verifies that the parking service access is currently valid by inputting the vehicle registration number into a device comprising a similar software application as the consumer, which processes the vehicle registration number with the parking identity data and time and computes a service validation data record, which is used to determine whether the service access is currently valid.

It is thus towards the creation of an advanced and improved system and method, which comprises technological improvements over prior art systems, and which has the capability to provide an anonymous use-of-service, and a seamless and anonymous service-payment mechanism for consumers, wherein confidential personal data is not stored in any readable form by a service provider, that the current invention of an improved system and method for service access and payment is directed.

Moreover, the improved ease-of-use of the current invention of an improved system and method for service access and payment over prior art systems, greatly simplifies service access and payment by the consumer as well as providing an immediate service validation capability by a supervising authority. In particular, service validation by a parking service supervising authority could incorporate drive-by validation using automatic vehicle number plate recognition software linked to an in-vehicle alarm. The invention thus offers a solution to catch and identify illicitly parked vehicles very easily such that drivers will choose not to park in a place where parking is not allowed, or without a valid parking ticket.

In addition, and particularly with reference to multimedia-based parking service access using a software application running on a telecommunications device, an application is needed which additionally keeps a consumer aware when the service payment is about to expire, and which provides the facility to make remote payments to extend the service provision payment if extension is permitted.

No systems are presently known to the applicants, which address this market need in a highly effective and economic way.

Further to the limitations of existing technologies used for solutions for service access and payments, and so far as is known, no optimized and improved system and method for service access and payments for services which provides anonymity of service access, while providing a secure and anonymous immediate seamless and transparent payment mechanism is presently available which is directed towards the specific needs of this problem area as outlined.

### ASPECTS OF THE INVENTION

Accordingly, it is an aspect of the present invention to provide an improved system and method for service access and payment by a consumer for one or more services offered by a service provider company, in which a consumer requests access to a service wherein no confidential personal data gets stored on the service provider's computer server.

It is a further aspect of one embodiment of the present invention to provide an improved system and method for service access and payment which has direct application for service payment to a service provider company using a consumer service access software application running on a consumer's telecommunications device such as a multimedia device or tablet, wherein the consumer enters confidential personal data and general service identity data into the software application, which generates a service access data record, which is transmitted to, and stored on the computer server of the service provider company.

It is a further aspect of one embodiment of the present invention to provide an improved system and method for service access and payment which has direct application for service payment to a service provider company using a consumer service access software application running on a consumer's telecommunications device such as a multimedia device or tablet, wherein the consumer enters confidential personal data and general service identity data into the software application which generates a service access data record, wherein the application encodes the confidential personal data to generate an encoded first protected identifier using a hash function or a one-way mathematical function, which is added to a second identifier which comprises unencoded clear-text general service asset identity data to form the service access data record, which is then transmitted to, and stored on the computer server of the service provider company.

It is a further aspect of one embodiment of the present invention to provide an improved system and method for service access and payment which has direct application for service payment, wherein the encoded first protected identifier within the service access data record stored on the computer server of the service provider company, cannot be further processed to derive the components of the data which formed the encoded protected identifier, thereby maintaining the anonymity of the consumer.

It is a further aspect of one embodiment of the present invention to provide an improved system and method for service access and payment for services in which a service assistant makes use of a telecommunications device comprising a service validation software application, which is similar to the consumer service access software application running on the consumer's telecommunications device, wherein the service validation software application is capable of computing a current service validation data record comprising an encoded first protected identifier from consumer confidential personal data together with a third identifier comprising unencoded clear-text general service identity data, and wherein the service validation software application is able to verify that the service access is valid by determining that the service access data record stored on the computer server is valid with reference to the current computed service validation data record.

It is a further aspect of one embodiment of the present invention to provide a system and method for service access and payment for services wherein the consumer opens the services software application on their telecommunications device, and wherein payments are made using a cryptocurrency such as Bitcoin, such that the software application comprises a cryptocurrency electronic wallet and wherein the consumer purchases and uploads cryptocurrency to be stored into the said wallet, and wherein the cryptocurrency may then be used to purchase services anonymously.

It is a further aspect of one embodiment of the present invention to provide a system and method for service access and payment for parking services, wherein the consumer opens the parking services software application on their telecommunications device, and enters into the application: confidential personal data, such as vehicle registration identity data, and general data, such as the parking location identity data, and the date and time for which the service is requested, wherein the data in different embodiments may be entered in any order, and or in part generated automatically with reference to data generated by the multimedia device and or received by the device, and wherein the software application computes an encoded first protected identifier from the confidential personal data using a hash function, and a second identifier comprising clear-text unencoded general data describing the service access identity data, and combines these to form a service access data record which is transmitted to and received by the computer server of the parking services company. In this separate embodiment, the software application generates a separate request for payment which may be done separately and or later by the consumer.

It is a further aspect of one embodiment of the present invention to provide a system and method for service access and payment for parking services wherein
the consumer opens the parking services software application on their telecommunications device, and enters into the application confidential personal data such as vehicle registration identity data, and general data, such as the parking location identity data, and the date and time for which the service is requested, wherein
the data in different embodiments may be entered in any order, and, or in part, generated automatically with reference to data generated by the multimedia device and or received by the device, and
then the software application offers access for payment, via one or more available secure micro-payment transaction companies, or payment is made by purchasing a cryptocurrency such as Bitcoin which is stored into an electronic wallet associated with the telecommunications device, wherein
cryptocurrency is sent to make the payment or a payment validation may be added to the service access data record or the validation may form a step to proceed through the software application service access request, wherein
the software application computes an encoded first protected identifier using a hash function or a one-way mathematical function from the confidential personal data, and adds this to a second identifier comprising clear-text unencoded general data describing the service access identity data, and combines these to form a service access data record which is transmitted to and received by the computer server of the parking services company.

It is a further aspect of one embodiment of the present invention to provide an improved system and method for service access and payment for services in which a parking service assistant makes use of a telecommunications device comprising a parking service validation software application, which is similar to the consumer parking service access software application running on the consumer's telecommunications device, wherein the service validation software application is linked to a vehicle automatic number plate recognition system, wherein the system reads the vehicle number plate and adds the parking service identity data and computes the service validation data record, and determines whether a valid service access data record is stored on the server. In a further separate embodiment the system may sound an alarm to alert the parking service assistant if an invalid service access data record is identified.

It is a further aspect of one embodiment of the present invention to provide a system and method for service access and payment for parking services wherein the consumer chooses where to park and opens the parking services software application on their telecommunications device,
wherein the software application determines the identity of the local parking zone automatically by receiving and processing a parking zone identifier transmitted locally via a broadcast radio signal being one broadcast according to one of the standards of WLAN, Bluetooth, and ZigBee, or
wherein the software application determines the identity of the local parking zone manually via a code entered by the consumer, or
wherein the software application determines the identity of the local parking zone with reference to the GPS coordinates of the multimedia device and with reference to stored data of parking identities linked to GPS coordinates, wherein the stored data is either provided by the service company or is provided by downloading a data file or is accessed from within the software application itself, or
wherein the software application determines the identity of the local parking zone manually via the camera on the consumer device processing a QR code or other matrix barcode, which is displayed locally at the parking, or which is provided by a website, or provided in paper form, and
wherein the consumer specifies the identity of their vehicle by entering the vehicle registration number, or by selecting a pre-stored vehicle registration number, and wherein
the consumer selects a micro-payment mechanism, or
the consumer pays with a cryptocurrency stored in an electronic wallet associated with the software application, or
the consumer sends a free-to-use payment data token, and wherein
the parking services software application computes the service access data record from all the service identity data and the payment data and vehicle identity data provided and transmits this to the parking services computer server.

It is a further aspect of one embodiment of the present invention to provide a system and method for service access and payment for parking services wherein the consumer chooses where to park and opens the parking services software application on their telecommunications device,
wherein the software application determines the identity of the local parking zone automatically by receiving and processing the code transmitted locally via a broadcast radio signal being one broadcast according to one of the standards of WLAN, Bluetooth, and ZigBee, or
wherein the software application determines the identity of the local parking zone manually via a code entered by the consumer, or
wherein the software application determines the identity of the local parking zone with reference to the GPS coordinates of the multimedia device and with reference to stored data of parking identities linked to GPS coordinates, wherein the stored data is either provided by the service company or is provided by downloading a data file or is accessed from within the software application itself, or
wherein the software application determines the identity of the local parking zone manually via the camera on the consumer device processing a QR code or other matrix barcode, which is displayed locally at the parking, or which is provided by a website, or provided in paper form, and wherein
the consumer specifies the identity of their vehicle by entering the vehicle registration number, or by selecting a pre-stored vehicle registration number, and wherein
the consumer selects a pay-later mechanism, and wherein
the parking services software application computes the service access data record from all the service identity data and vehicle identity data provided and transmits this to the parking services computer server, and generates a message to inform the consumer the amount to pay and by what date.

Other aspects and advantages of different embodiments of this invention will become apparent from the description to follow when read in conjunction with the accompanying drawings.

### BRIEF SUMMARY OF THE INVENTION

Certain of the foregoing and related aspects are readily-attained according to the present invention by the provision of a novel improved system and method for service access and payment, which serves to address the diverse requirements for validating secure, seamless and transparent service access in which confidential data is transferred to the service company computer server in an encoded form using an undecipherable hash function or one way mathematical function, thus maintaining the anonymity of the consumer, yet providing a service access mechanism which can be validated by a service assistant. Service payment is further improved by including immediate payment via one or more currently available micro-payment transaction companies such as PayPal and the like, or payment is made using any available cryptocurrencies such as Bitcoin, wherein the cryptocurrency is purchased and stored in an electronic wallet associated with the software application. The ease of validating service access renders the system highly advantageous since violation is easily detected thus further encouraging all consumers to pay for service access and or comply with legitimate rules for service access. The invention comprises substantial technical improvements over all prior art systems by making service validation anonymous. In the embodiment of parking services access, the provision of immediate payment within the application, alert messages when the parking service duration is about to expire, and the facility to pay for and extend the service validation period remotely, offers a highly advantageous consumer-focused solution to pay for parking efficiently, securely and easily, while avoiding the tedious, non-user-friendly difficulties of prior art systems.

Other aspects and features of the present invention will become apparent from the following detailed description considered in connection with the accompanying drawings, which disclose several key embodiments of the invention. It is to be understood, however, that the drawings are designed for the purpose of illustration only and that the particular descriptions of the invention in the context of the parking service access and payment application are given by way of example only, to help highlight the advantages of the current invention and do not limit the scope of the invention.

### BRIEF DESCRIPTION OF THE DRAWINGS

FIG. 1 illustrates a schematic of different ways that the consumer multimedia device is able to capture the parking identity data according to the invention.
FIG. 2 illustrates a schematic showing two embodiments how service access payment may be made to pay for the parking service.
FIG. 3 illustrates a schematic showing one embodiment how the service access data record is sent to the service company computer server.
FIG. 4 illustrates a schematic showing the communication and processing steps between the consumer software application and the micropayment server.
FIG. 5 illustrates a schematic showing the communication and processing steps between the consumer software application and the service provider server.
FIG. 6 illustrates a schematic showing the communication and processing steps between the service assistant software application and the service provider server to determine the service status.

### DESCRIPTION OF A PREFERRED EMBODIMENT

Reference will now be made in detail to some specific embodiments of the invention including the best modes contemplated by the inventor for carrying out the invention. Examples of these specific embodiments are illustrated in the accompanying drawings. While the invention is described in conjunction with these specific embodiments, it will be understood that it is not intended to limit the invention to the described embodiments. On the contrary, it is intended to cover alternatives, modifications, and equivalents as defined by the appended claims.

The following description makes full reference to the detailed features, which may form parts of different embodiments as outlined in the aspects of the invention. In the following example, reference is made to a service access application which describes access to vehicle parking services, while it will be obvious that the service access and payment invention is suitably applied to a wide range of services which involve a consumer requesting service access and payment for services which involve temporary use of a space, such as renting a room, paying for a cinema seat, renting a sunbed on a beach, or renting a product such as a canoe, or boat, or a vehicle trailer. Furthermore, the absence of a product at a certain time, such as a boat missing from a designated mooring marker, or a canoe missing from a storage space, can form the way in which the service validation is determined.

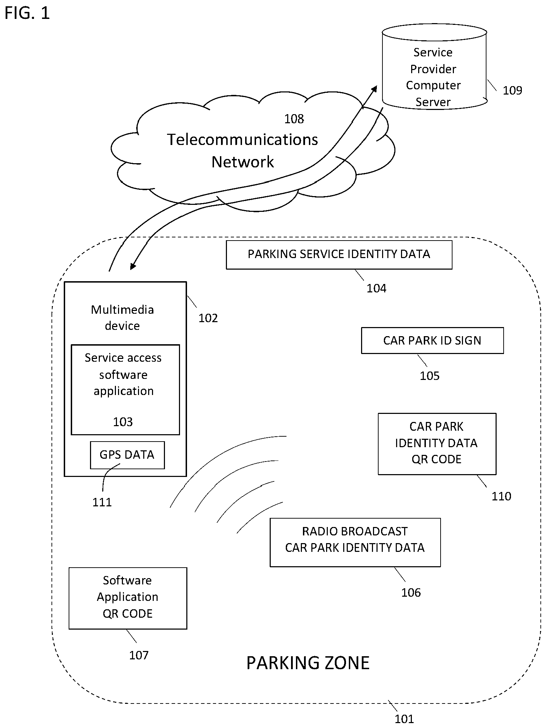

Referring now in detail to the drawings and in particular FIG. 1 thereof, therein illustrated is a schematic of the improved system and method for service access and payment as according to one embodiment of the invention which describes access to and payment for parking services.

A consumer is present within a designated parking zone (101) with access to a multimedia device (102). The consumer opens a parking service access software application (103) running on the device. The parking service access software application requests parking service identity data (104) such as a car park location and a parking space identity where needed. The parking service identity data (104) can be provided by the consumer who enters the parking data manually into the software application (103) from a car park ID sign (105) displayed in or near the parking zone, or entered from a data file received by the device (102). In a separate embodiment the software application (103) can seek out the correct parking zone identity data based upon the GPS location of the vehicle and or registered parking zone access rights. In one embodiment, the multimedia device communicates with the service company computer server (109) across the telecommunications network (108) to access this data.

Alternatively, the parking service identity data is broadcast locally via a radio signal (106), such as via WLAN, or via Bluetooth, or via ZigBee, or via another packet switched radio protocol, wherein the consumer multimedia device (102) receives and processes the parking service identity data and the software application automatically seeks out and processes the received parking service identity data and stores it into the software application (103). In the instance that several different parking service identity data are shown, the consumer may select which one is correct.

Alternatively, the parking service identity data (104) may exist as a QR code on a parking sign (110) and the consumer may use his or her multimedia device to capture and process the QR code which is then entered into the parking service software application.

In another embodiment, the consumer may use a separate QR code (107) to make it easy to download the software application to their multimedia device in case they do not have the software application installed.

Alternatively, the parking service identity data is determined from the GPS location data (111) of the consumer multimedia device, wherein the parking service software application determines the parking service identity data from the GPS location. This may be done by looking up stored parking identity data from a server map system such as Google Maps or the GPS location may be transmitted to the parking services computer server by the parking service software application, wherein the parking services computer server (109) communicates the level of service access available back to the parking service software application.

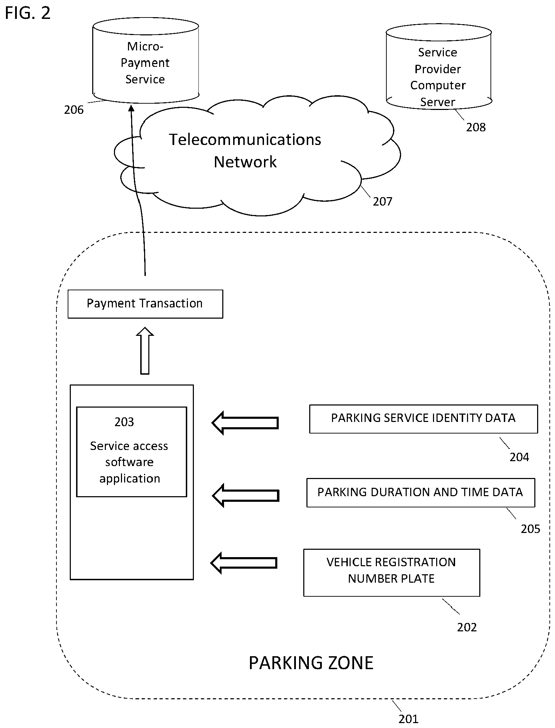

Referring now in detail to FIG. 2, therein illustrated is a schematic showing one embodiment how service access payment may be made to pay for the parking service.

To access paid parking service, the parking service software application processes the parking service identity data (204) with the requested parking duration and time data (205) with the consumer confidential personal data which includes the vehicle registration number plate (202) and generates access to a micro-payment service (206) such as PayPal so that the consumer may pay for the parking directly. In separate embodiments the micro-payment service sends back a confirmation to the application. Alternatively, payment may be made directly to the subscription of the multimedia device, wherein the payment appears as an invoice on the next mobile operator bill.

In a different embodiment, the consumer purchases cryptocurrency and stores the cryptocurrency in the multimedia device in an electronic wallet which is associated with the service access software application, wherein the software application computes the payment needed for the parking service and wherein cryptocurrency is sent to the service provider computer server (208) as part of the service access data file to pay for the parking service.

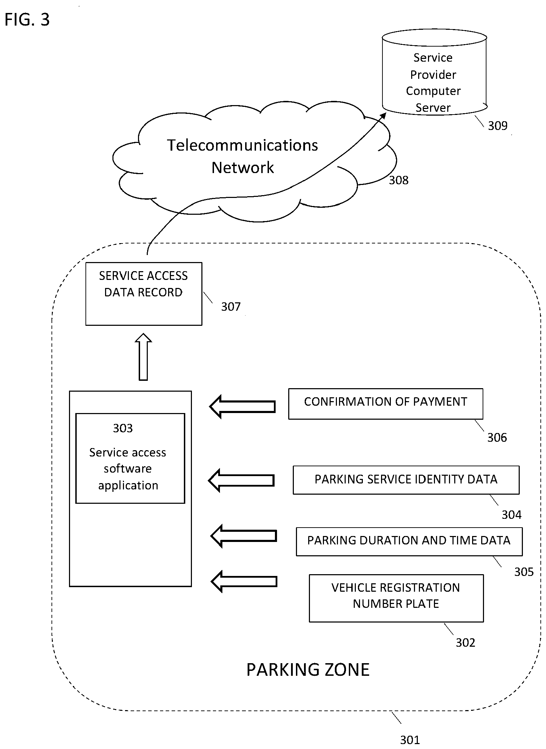

Referring now in detail to FIG. 3, therein illustrated is a schematic showing one embodiment how the service access data record is sent to the service company computer server.

In a first embodiment, after payment has been completed and confirmed, the software application generates a service access data record (302) derived from the parking service identity data (304) and the vehicle registration number plate (302) and the confirmation of payment (306) and the parking duration and time data (305). In different embodiments, an identity of the confirmation of payment may be added unencoded so that the service company can correlate a payment with a parking services access event. In a second embodiment, payment may be made with cryptocurrency such as Bitcoin, and the software application (303) computes the amount of cryptocurrency which must be paid for the service, and this amount is added to the service access data record and sent to the service provider computer server. Using a cryptocurrency maintains complete anonymity of the consumer from the service provider company.

After the consumer has confirmed the transaction, the encoded service access data record is then transmitted to the parking services computer server (309). In one embodiment, after receiving the encoded service access data record, the computer server sends back to the consumer through the software application an acknowledgement that the service access is now valid.

According to different embodiments, the valid service access now provides the consumer with service access status messages such as when the paid service will expire, and or in the instance that part of the parking period is free, when the free parking period will expire. In the instance that the paid parking period may be extended, the server provides the option to make an extra payment to extend the validation of the parking service access. This extra payment may be made using cryptocurrency, or the software application is again directed to a micro-payment service.

A key advantage of this improved system and method for service access and payment is the ease by which parking service assistants can verify that a consumer has a valid service status. To achieve this, a service assistant possesses similar service data processing software on a telecommunications device which may be hand-held or vehicle-mounted. The service assistant computes a service validation data record using the parking identity data (104) and the visible vehicle registration number plate data (202).

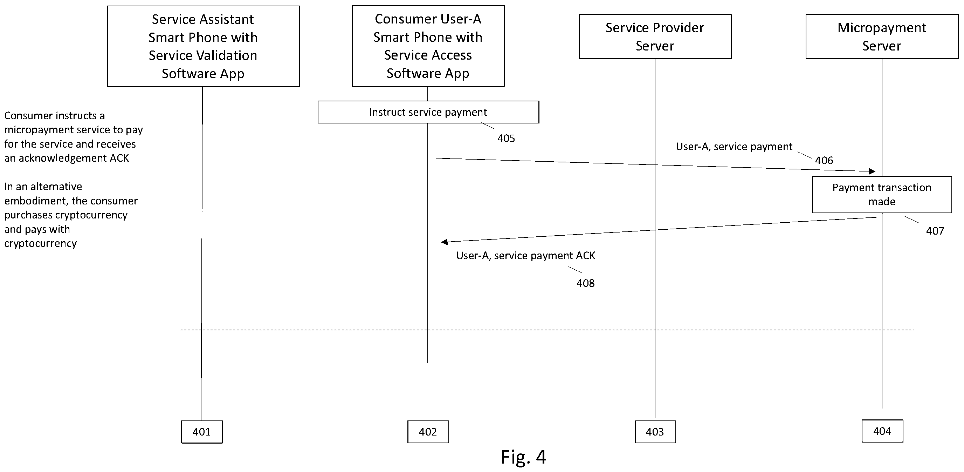

Referring now in detail to FIG. 4, therein illustrated is a schematic showing one embodiment how the consumer User-A instructs payment to be made via a micropayment service.

The figure shows four entities: a service assistant having a smart phone comprising a service validation software App (401), a consumer (User-A) having a smart phone comprising a service access software application (402), a service provider server (403), and a micropayment server (404).

The consumer instructs the App to communicate with a micropayment service (405). The App computes the amount that must be paid and the request for payment is sent to the micropayment service (406). The micropayment server (404) makes the payment transaction (407) and sends confirmation and a service payment acknowledgement ACK (408) back to the consumer service access software application (402).

In an alternative embodiment, payment is made using a cryptocurrency which is stored in the multimedia device, wherein the cryptocurrency amount to pay for the service is computed and transmitted with the service access data record.

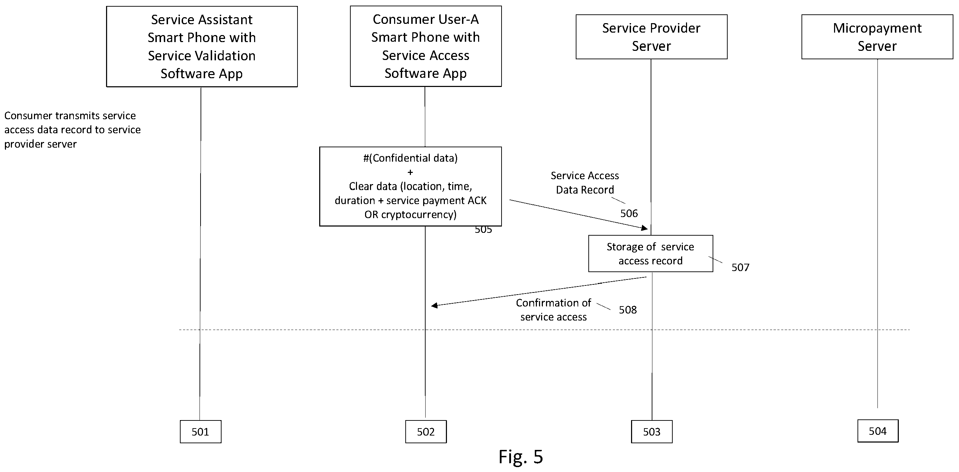

Referring now in detail to FIG. 5, therein illustrated is a schematic showing one embodiment how the consumer User-A communicates a service access data record to the service provider server (503).

The figure shows four entities: a service assistant having a smart phone comprising a service validation software App (501), a consumer (User-A) having a smart phone comprising a service access software application (502), a service provider server (503), and a micropayment server (504).

The consumer (User-A) smart phone software application (502) compiles a service access data record from a hash function of confidential data with clear data such as location and time and duration, and with either a service payment acknowledgement (505) or with cryptocurrency or with a free-to-use payment token if the service is free. The service access data record is transmitted (506) to the service provider server (503). The service provider server (503) stores the service access data record (507), then sends confirmation of service access (508) back to the consumer (User-A) service access software application (502).

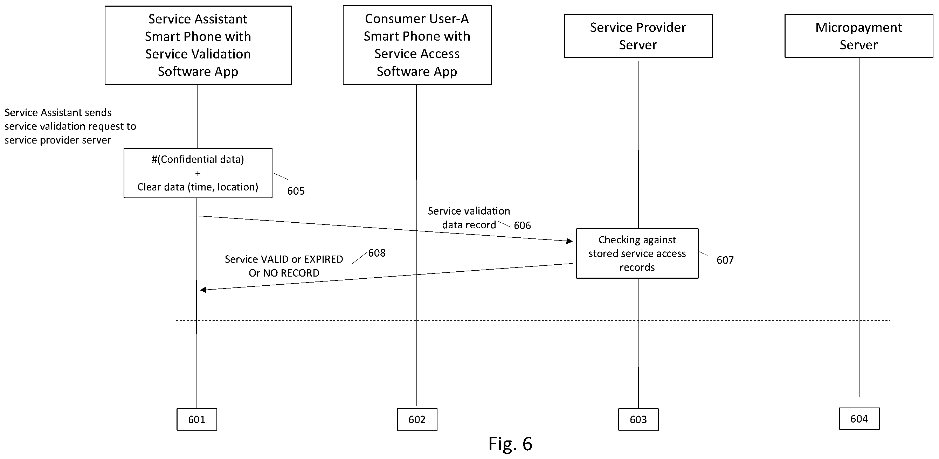

Referring now in detail to FIG. 6, therein illustrated is a schematic showing one embodiment how a service assistant with a smart phone having a service validation software application determines if the service is valid or expired.

The figure shows four entities: a service assistant having a smart phone comprising a service validation software App (601), a consumer (User-A) having a smart phone comprising a service access software application (602), a service provider server (603), and a micropayment server (604).

The service assistant service validation software App (601), compiles a service validation data record, which includes (i) encoded confidential data using a hash function to produce a protected identifier which will be identical to that computed by the consumer (User-A) when accessing the service, and (ii) clear data such as current time and location (605). This service validation record is then sent (606) to the service provider server (603) to determine if the service access is still valid or expired. The service provider server (603) checks the service validation record against stored records (607) by seeking out the encoded first protected identifier which exists in an encoded form, and which will be identical in both the service access data record, and in the service validation data record.

The service provider server then sends a response (608) which will either be currently VALID, or EXPIRED, or NO RECORD FOUND.

In different embodiments, the service provider server may periodically send the consumer service access software application a message indicating when the service access will expire, with a suggestion that the consumer may wish to extend the service access.

This service validation record comprises the same encoded hash function as the corresponding service access record which may be used to identify the stored record on the service provider company server.

The computed service validation data record can be used to determine if a stored service access data record stored on the parking services computer server is currently still valid. This can be done using a challenge response by the service assistant software application transmitting the computed service validation data record to the said computer server which processes the received computed service validation data record. In one embodiment the computer server identifies the service access data record and whether the service access is still valid at this current time by identifying and processing the clear data associated with, and uniquely identified by, the encoded first protected identifier within the stored service access data record, which is identical to the encoded first protected identifier in the computed service validation data record. If the stored duration data does not exceed the current time, the service access is still valid.

All manner of computer server data management applications may be used to run the challenge response computation. The server needs to receive, process, and determine whether a service access data record is stored in its memory, and extract data from the clear text part of the data record and process that in relation to data received in a service validation request. If the service access is found to be valid, the computer server transmits a message back to the service assistant multimedia device, that the service access is valid for that consumer. If the data value is not found, the computer server transmits a message back to the service assistant multimedia device, that the service access is invalid for that consumer, which may result in that consumer receiving a friendly payment request.

In further embodiments, the service assistant may be driving a vehicle which includes a vehicle-mounted automatic number plate recognition system which can capture and process the vehicle number plate and compute the service validation data record by combining this data with in encoded form known parking identity data from maps combined with GPS location information and or by receiving and processing local radio broadcasts (105) comprising parking identity data (103).

According to the first embodiment of the current invention a consumer desires anonymous and seamless access to parking services which requires the minimum of interaction with a software application running on their telecommunications device. The software application makes possible the encoding of all personal data entered into it by the consumer such as personal identity data and the vehicle registration number plate, wherein no confidential personal data is ever transmitted and stored on a service company computer server in a form that can be decoded. Nevertheless, a derivative of the data is stored in an encoded form and it is this derivative which may be used to look up and identify the stored clear text which provides the means to validate the service access.

A key advantage of the invention is the processing of the encoded consumer confidential personal data with the clear text service identity data, which in the case of the car parking services comprises: the location data, the car park identifier, the start time of the service access, and the duration of stay. The software application processes the service access data and in a preferred embodiment, generates the option to make payment immediately via existing known micro-payment service companies or payment is made using a cryptocurrency such as Bitcoin.

The emphasis of this improved service access and payment system is upon helping the user register for, and gain access services to which he or she is entitled without incurring any additional service charges or late payment fees. More importantly, the invention improves upon all other prior art systems by maintaining confidential, all the personal data received by the service company, by the application providing this part in an encoded form and the service identity data in an unencoded form, such that the data residing on the service company computer server is anonymous yet readable. In some embodiments, the location data may be encoded, while in other embodiments the location data is sent as clear text.

The software application provides the facility of real time alert messages so that the consumer can avoid any penalty charges of parking beyond the time allowed, both in free-parking areas with restricted parking times, and when the paid for parking period is about to expire in which case the consumer may purchase an extension remotely. The facility of immediate payment means that payment need not be paid for in advance, unless a consumer wants to reserve parking in advance, in which case this can be made possible. The invention also provides a high degree of flexibility of increasing the duration of service access as requirements evolve by making repeated use of the extended payment option.

The improved system and method for service access and payment provides a convenient solution for private parking, allowing legitimate users to register their occupancy, for car parks as described earlier, but also for zones of cities which do not have designated parking places. The parking identity data for parking zones such as street parking can correspond to one of any number of spaces in the same zone. In fact, depending on the layout of the carpark, a service assistant with a vehicle mounted service validation system using an automatic number plate recognition system, which is mounted to give a wide field of view, or which is also movable to read the number plates easily, does not require vehicles to be in designated parking spaces. This latter system is capable of scanning all the number plates in the car park and determining if each vehicle has a valid service access within the designated parking zone.

In the example of parking service access, the system and method according to the invention further provides the consumer with the means to validate his or her access to private parking services which are available to the consumer by way of his vehicle already being registered to use that facility. Additionally, some public parking services may be free for a limited period such as public car parks outside shopping centres. The invention may include the feature to register and validate service access and then update the status of the parking validation by sending one or more messages to alert the consumer that the free parking period is drawing to a close and or provide the option for remote payment to extend parking access if that is permitted.

According to the current invention of an Improved System and Method for Service Access and Payment, the multimedia access device used by a consumer to access a service associated with a pre-registered asset, communicates with and sends data to a service provider server.

The service provider provides services for renting the use of assets of many different types, wherein several examples of asset types comprise: a parking lot identifier, a parking space identifier, a seat number, a boat identifier, a camping site identifier, a swimming pool identifier, a hotel room identifier, a vehicle trailer identifier, a cinema seat number, a theatre seat number, an opera house seat number, a concert hall seat number, a train seat number, a plane seat number, a bus seat number, a boat seat number, a bicycle identifier, a beach sunbed identifier, a fishing location identifier, a golf course identifier, a tennis court identifier, a sports stadium identifier, a go-cart identifier, an ice rink identifier, a swimming pool identifier, a water park identifier, a sports centre identifier, a theme park identifier, a horse riding identifier, a skate board park identifier, a National Park identifier, a safari park identifier, a ski resort identifier, a ski-lift identifier, a congestion charge area identifier, a toll road identifier, a toll bridge identifier, a country home identifier, a castle identifier, and the like.

In a preferred embodiment, the software application running on the multimedia access device, first privacy-protects personal identity data by encoding a first identifier associated with the multimedia access device to form a protected identifier. This protected identifier is added to a second clear text identifier wherein the second identifier comprises data associated with an asset registered with the service provider which a consumer wishes to use. When a consumer wishes to access a service for a certain period of time using the service provider asset, the consumer multimedia access device configures a service access request transmission, and the protected identifier and second identifier are transmitted by the multimedia access device software application to the service provider server. The service provider server then sends a response which is received by the multimedia access device which acknowledges that the transmission, including the protected identifier and said second identifier, have been received and stored by said service provider server.

In the additional instance that the service requires payment, the multimedia access device software application may further include in the service access request transmission, a digital token, which indicates that payment has been made for using the said service provider asset. The digital token may take a variety of forms and be based on one or more of the following payment types: a unit of crypto currency, an acknowledgement of successful payment, a receipt of a payment system, the amount paid, the currency used for payment.

It is further recognized that some services may be free for a class of users, such as those for example with an open or extended duration licence to use a service, such as a resident who has genuine access to a resident-restricted parking area, which is otherwise private for non-residents. In this instance, the resident may include an authentic free-to-use digital token with the second identifier, which indicates that no payment is required, and or that the resident is a legitimate user of the parking. This embodiment of the invention anticipates that guests and or resident visitors may be allowed to use short-duration, free-to-use digital tokens from the resident or from the building management services. These free-to-use digital tokens may also be used by the resident using the resident's own multimedia access device on behalf of their guest, so that the guest need not download and install the service access software application on a multimedia device.

After the service access request transmission has been received by the service provider server, it is stored by the server, wherein the privacy-protected or encoded, protected identifier is stored in a particular association with the clear text second identifier which comprises data identifying the service provider asset and or service provider asset use. When requesting use of the asset for a specific time duration, the user specifies a period of time for which the service access is requested, and this is received and stored by the service provider server.

For the specified time duration period, for which the service access is requested by a particular user C, the server maintains a service access validation status for the service access for user C. In different embodiments the server can determine if the service access status has passed one of a number of different threshold values according to different stages of the service access. In the instance that the service access duration is approaching the end of the service duration period, the server may send a status message to the multimedia service access device of user C about the status of the service access. In the alternative embodiment where the service access multimedia device is fitted to the vehicle as part of a smart vehicle application, user C may receive the said status message on a separate multimedia device forwarded from the in-vehicle system.

The status message may include any one or more of the following: indication that the service access is approaching the end of the service access period, an indication that the service access period has ended, a request to extend the service access period, a request to renew the service access period, a request to pay extra for the service access period. In some embodiments, the payment for the service access may include a first over payment such that the service access has a credit. In this way, the user simply has money deducted from the credited over payment and thus would not incur any penalty fines. In this instance, the user may be requested to confirm that the service access extended time payment is requested by responding to the status message.

A key emphasis of the invention is that all personal identity information and personal vehicle identification data, in the instance of the car parking application, remains encoded such that the user and his or her car details remain anonymous from the serviced provider such that no personal data can be decoded, and or accessed, and or stored, and or sold by or to any third parties. Communication is strictly between the software application on the multimedia access device and the service provider server. Consequently, the service provider server holds no data, such as an alternative phone number to forward status messages to. For this reason, a smart vehicle solution would require that the user privately set up any message forwarding from their smart vehicle service access device to a separate hand-held multimedia device.

The invention thus provides an anonymous means for a user to access a service using a multimedia service access device and a means for a service assistant to verify or validate that the service access for use of an asset is still valid. The service assistant does this using a multimedia service validation device, which is capable of running a very similar software application as the service access software application.

The service assistant enters the visible identity data associated with the use of a service provider asset into the service validation software application. This identity data is then encoded to form a protected identifier and combined with a third identifier, which may comprise location data and or time data and or other data in clear text, which is then transmitted to the service provider server as a service validation transmission.

In different embodiments some or all of the identity data may not be visible but received as a wireless transmission by the service assistant service validation device, for example a location identity may be transmitted locally as a wireless transmission which may be received and processed by the software application.

The service provider server receives the service validation transmission and determines whether an identical protected identifier exists in the server memory, stored in relation with the asset data. If the server finds a protected identifier stored in the server memory, the server then checks the service status. If the service status is determined to be valid or positive, the server transmits a service validation response back to the multimedia service validation device indicating that the protected identifier is valid for said asset data associated with said third identifier. If the service status is determined to be invalid or negative, the server transmits a service validation response back to the multimedia service validation device indicating that the protected identifier is invalid for said asset data associated with said third identifier.

The first identifier which is privacy-protected, i.e. encoded, may be derived from one or more of the following elements: the multimedia access device's hardware ID, the multimedia access device's network interface identifier, the multimedia access device's user name, a vehicle registration number, a random or pseudo random number, an email address, mobile phone data, IP address, payment data, banking details, postal address, and or personal identity information.

As described earlier, the step of encoding is performed by one or more of the following: using a cryptographic hash function, and or using a one-way mathematical function.

In different embodiments, the second identifier is derived from one or more of the following information elements: a timestamp, a time duration, a location identifier, geographical coordinates, a GPS location, an asset identifier, a street name, a city name, a country name, a seat number, a parking lot identifier, a parking space identifier, a seat number, a boat identifier, a camping site identifier, a swimming pool identifier, a hotel room identifier, a vehicle trailer identifier, a cinema seat number, a theatre seat number, an opera house seat number, a concert hall seat number, a train seat number, a plane seat number, a bus seat number, a boat seat number, a bicycle identifier, a beach sunbed identifier, a fishing location identifier, a golf course identifier, a tennis court identifier, a sports stadium identifier, a go-cart identifier, an ice rink identifier, a swimming pool identifier, a water park identifier, a sports centre identifier, a theme park identifier, a horse riding identifier, a skate board park identifier, a National Park identifier, a safari park identifier, a ski resort identifier, a ski-lift identifier, a congestion charge area identifier, a toll road identifier, a toll bridge identifier, a country home identifier, a castle identifier, and the like.

The software application running on the multimedia access device which communicates with the service provider server comprises the capability to encode a first identifier associated with the said multimedia device to form a protected identifier and add this to a second identifier in clear text comprising data associated with an asset which is registered with the service provider server to form a service access transmission. The software application further has the capability to manage a payment transaction and to add a digital token representing a payment status or add a free-to-use digital token to the service access transmission. The multimedia device then sends the transmission to the server and, if the transmission is successfully stored, the server sends an acknowledgment which is received by the multimedia device.

While the preferred embodiment has emphasized the use of a multimedia device such as a smart phone, this is given by way of example only, and the invention is not limited to this type of device. All manner of multimedia devices may be used such as a laptop, a wireless computer, an iPad, an iPhone, a tablet etc. It is to be understood that the aforementioned multimedia devices generally comprise: a data processing platform, a screen, computer memory, a radio internet access communication capability, which may use any radio telecommunications standard, wherein the device comprises an antenna and radio telecommunications software and hardware, a data processing software and or the means to process image data such as QR-codes or other 2 dimensional barcodes, an operating system, and, in different embodiments, data encryption software and a data decryption software, a power supply, and all other common hardware and software functionality found in multimedia devices.

In the context of the current invention, in a preferred embodiment, the service provider server is a computer capable of processing requests and delivering data to other computers and other wirelessly connected devices over the internet or over local networks. The server may comprise a web server delivering web pages, which are capable of being accessed over the Internet using a web browser such as Internet Explorer, Chrome, Firefox, Opera, Safari, etc.

According to different embodiments, the service provider server may comprise a single server capable of processing many different operations, or the service provider server may comprise several servers each dedicated to different processing tasks such as service access request processing, software updates, software integrity checking, service validation request processing, and authentication and, in different embodiments encryption and decryption. The server may also include functionality to upload and backup files online through a cloud storage system or via online backup services according to different use requirements.

The server comprises both server hardware and server software, wherein the hardware needed is designed to support the number of server clients accessing the server software services.

In different embodiments, the server architecture may employ a client-server networking model integrating websites and communication services.

Different embodiments of the communications between the service provider server, and the multimedia devices may also employ peer-to-peer networking functionality, wherein pluralities of devices on a network may function as either a server or a client on an as-needed basis. This offers a greater degree of privacy and may be used in low traffic instances.

The service provider server may also comprise a server cluster where computing resources are shared to maximize processing efficiency.

While only several embodiments of the present invention have been described in detail, it will be obvious to those persons of ordinary skill in the art that many changes and modifications may be made thereunto without departing from the spirit of the invention. The present disclosure is for illustration purposes only and does not include all modifications and improvements, which may fall within the scope of the appended claims.

## Claims

1. Method performed by a multimedia access device for communicating with and sending data to a service provider server, the method comprising the steps:
Encoding a first identifier associated with said multimedia access device to form a protected identifier;
Sending said protected identifier and a second identifier comprising data associated with an asset registered with said service provider server to said service provider server,
receiving a response from said service provider server indicating that said protected identifier and said second identifier have been received and stored by said service provider server.

2. Method according to claim 1, wherein the step of sending said protected identifier and said second identifier comprising data associated with an asset registered with said service provider server to said service provider server, further comprises:
Sending a digital token indicating a payment for using said asset registered with said service provider server, wherein said token is based on one or more of the following: a unit of crypto currency, an acknowledgement of successful payment, a receipt of a payment system, the amount paid, the currency used for payment, a free-to-use digital token.

3. Method according to claim 1 or 2, wherein said protected identifier is stored by said service provider server in relation with said asset data associated with said second identifier for a predetermined duration of time, the method further comprising the step:
generating a message indicating said predetermined duration of time has passed a threshold value.

4. Method performed by a service provider server for storing and validating data, the method comprising the steps:
Receiving from a multimedia access device a protected identifier formed by encoding a first identifier associated with said multimedia access device and a second identifier comprising data associated with an asset registered with said service provider server,
storing said protected identifier in relation with said asset data associated with said second identifier,
sending a response indicating that the said protected identifier and said second identifier has been received and stored by said service provider server.

5. Method performed by a service provider server according to claim 4, wherein the step of
receiving from a multimedia access device a protected identifier formed by encoding a first identifier associated with said multimedia access device and a second identifier associated with an asset registered with said service provider server, further comprises
receiving a digital token indicating a payment for using said asset registered with said service provider server, wherein said token is based on one or more of the following: a unit of crypto currency, an acknowledgement of successful payment, a receipt of a payment system, the amount paid, the currency used for payment, a free-to-use digital token.

6. Method performed by a service provider server according to claim 4 or 5, further comprising the steps:
Receiving from a multimedia validation device a protected identifier formed by encrypting said first identifier associated with said multimedia access device and a third identifier associated with an asset registered with said service provider server,
determining whether an identical protected identifier is stored in relation with said asset associated with said third identifier,
in case the determination is positive, sending a response to said multimedia validation device indicating that the protected identifier is valid for said asset associated with said third identifier, and
in case the determination is negative, sending a response to said multimedia validation device indicating that the protected identifier is invalid for said asset associated with said third identifier.

7. Method performed by a multimedia validation device for validating data with a service provider server, the method comprising the steps:
encoding a first identifier associated with a multimedia validation device to form a protected identifier;
sending to said service provider server said protected identifier and a third identifier comprising data associated with an asset registered with said service provider server,
receiving a response from said service provider server indicating that the protected identifier is valid for said asset data associated with said third identifier after the said service provider server has determined that the protected identifier is valid for said asset data associated with said third identifier.

8. Method according to any one of the preceding claims, wherein said first identifier is derived from one or more of the following information elements: the multimedia access device's hardware ID, the multimedia access device's network interface identifier, the multimedia access device's user name, a vehicle registration number, a random or pseudo random number, an email address, mobile phone data, IP address, payment data, banking details, postal address, personal identity information.

9. Method according to any one of the preceding claims, wherein the step of encoding is performed by one or more of the following: using a hash function, using a one-way mathematical function.

10. Method according to any one of the preceding claims, wherein said second identifier comprising data associated with an asset registered with said service provider server is derived from one or more of the following information elements: timestamp, time duration, location identifier, geographical coordinates, GPS location, asset identifier, street name, city name, country name, parking lot identifier, parking space identifier, seat number, boat identifier, camping site identifier, swimming pool identifier, a hotel room identifier, a vehicle trailer identifier, a cinema seat number, a theatre seat number, an opera house seat number, a concert hall seat number, a train seat number, a plane seat number, a bus seat number, a boat seat number, a bicycle identifier, a beach sunbed identifier, a fishing location identifier, a golf course identifier, a tennis court identifier, a sports stadium identifier, a go-cart identifier, an ice rink identifier, a swimming pool identifier, a water park identifier, a sports centre identifier, a theme park identifier, a horse riding identifier, a skate board park identifier, a National Park identifier, a safari park identifier, a ski resort identifier, a ski-lift identifier, a congestion charge area identifier, a toll road identifier, a toll bridge identifier.

11. Multimedia access device for sending data to a service provider server, wherein the service provider server receives and stores said data, wherein said multimedia access device being configured to
encode a first identifier associated with said multimedia access device to form a protected identifier;
send to said service provider server said protected identifier and a second identifier comprising data associated with an asset registered with said service provider server, and
receive a response from said service provider server indicating that the data has been successfully received and stored.

12. Multimedia access device according to claim 11, further configured to send a digital token indicating a payment for using said asset registered with said service provider server, wherein said token is based on one or more of the following: a unit of crypto currency, an acknowledgement of successful payment; a receipt of a payment system, the amount paid, the currency used for payment, a free-to-use digital token.

13. Service provider server for receiving and storing and validating data, said service provider server being configured to
receive from a multimedia access device a protected identifier formed by encoding a first identifier associated with said multimedia access device and a second identifier comprising data associated with an asset registered with said service provider server,
store said protected identifier in relation with said asset data associated with said second identifier, and
send a response indicating that the data received by said service provider server has been successfully received and stored.

14. Service provider server according to claim 13, further configured to receive a digital token indicating a payment for using said asset registered with said service provider server, wherein said token is based on one or more of the following: a unit of crypto currency, an acknowledgement of successful payment; a receipt of a payment system, the amount paid, the currency used for payment, a free-to-use digital token.

15. Multimedia validation device for validating data with a service provider server, said multimedia validation device being configured to
encode a first identifier associated with a multimedia validation device to form a protected identifier;
send said protected identifier and a third identifier comprising data associated with an asset registered with said service provider server,
receive a response from a service provider server indicating that the protected identifier is valid for said asset data associated with said third identifier, after the said service provider server has determined that the protected identifier is valid for said asset data associated with said third identifier.
